Europäisches Patentamt

European Patent Office

Office européen des brevets

(19)

(11) Numéro de publication : **0 072 725 B2**

(12) **NOUVEAU FASCICULE DE BREVET EUROPEEN**

(45) Date de publication du nouveau fascicule du brevet : **21.08.91 Bulletin 91/34**

(51) Int. Cl.⁵ : **B60S 5/00, B21D 1/14, G01B 5/00**

(21) Numéro de dépôt : **82401404.7**

(22) Date de dépôt : **28.07.82**

(54) **Dispositif de pince destiné à être monté sur un marbre ou banc de contrôle des déformations éventuelles de la carrosserie d'un véhicule.**

(30) Priorité : **13.08.81 FR 8115672**

(43) Date de publication de la demande : **23.02.83 Bulletin 83/08**

(45) Mention de la délivrance du brevet : **22.01.86 Bulletin 86/04**

(45) Mention de la décision concernant l'opposition : **21.08.91 Bulletin 91/34**

(84) Etats contractants désignés : **AT BE CH DE GB IT LI NL SE**

(56) Documents cités :
DE-A- 2 236 145
DE-A- 2 507 412
DE-A- 2 745 807
DE-A- 2 914 333
FR-A- 2 384 229
FR-A- 2 423 748

(56) Documents cités :
GB-A- 2 019 573
US-A- 4 239 196
Katalog CF 75 Fa. DE-STA-CO
Katalog CF 80 Fa. DE-STA-CO
Schwed. Buch "Den stora Automobilboken Band II", S.778, Stockholm
Blackhawk-Prospekt P.2o1/3-GG-09.78-PO 10000
rororo Techniker-Lexikon, Bd.23, SS.1497-1499
Blackhawk-Prospekt P.188

(73) Titulaire : **CELETTE S.A.**
67 rue Maugiron B.P. 9 Vienne-Estressin
F-38206 Vienne Cedex (FR)

(72) Inventeur : **Celette, Germain**
30, Boulevard de la république
Vienne Isère (FR)

(74) Mandataire : **Maureau, Philippe**
Cabinet Germain & Maureau Le Britannia - Tour C 20, bld Eugène Déruelle
F-69432 Lyon Cédex 03 (FR)

EP 0 072 725 B2

## Description

La présente invention a pour objet un dispositif de pince, destiné à être monté sur un marbre ou banc de contrôle des déformations éventuelles de la carrosserie d'un véhicule, afin de maintenir la carrosserie immobilisée pendant les opérations de contrôle et de redressement de cette dernière.

Comme on le sait, le contrôle des déformations d'une carrosserie de véhicule ou la réparation d'une carrosserie accidentée sont exécutés sur un banc ou marbre de contrôle tel que celui décrit dans le brevet fançais FR-A-2423748, qui est équipé d'un ensemble de ferrures et de dispositifs de pinces permettant d'immobiliser en place le véhicule pendant les opérations.

Dans ce mode de réalisation connu, les dispositifs de pinces qui assurent le serrage des lèvres du bas de caisse, sont chacun constitués d'un barreau vertical portant à son extrémité supérieure la pince proprement dite, d'un collier de serrage à l'intérieur duquel le barreau est mobile verticalement, et d'un bras horizontal sur lequel le collier est monté coulissant. Le barreau horizontal est rapporté le long de la poutre latérale associée du banc de contrôle, et fixé par son extrémité sur cette poutre.

Ce système permet de modifier la position des pinces dans différentes directions, afin de les placer correctement pour serrer les lèvres du bas de caisse. Cependant, la mise en oeuvre de ces systèmes de pinces est relativement peu commode, et le positionnement de la pince manque en pratique de précision. De plus, on constate que la résistance à la flexion de ces pinces, dans les diverses directions où elle est sollicitée. n'est pas toujours suffisante.

Le but de l'invention est de fournir un dispositif de pince destiné à être monté sur un marbre ou banc de contôle des déformations éventuelles de la carroserie d'un véhicule, qui soit réglable de façon très précise, dans trois dimensions, qui possède une excellente rigidité, qui soit d'un faible encombrement, qui soit d'une utilisation simple et sure pour l'opérateur, et qui possède une grande fiabilité.

Par rapport au FRA-A-2 423 748 qui décrit déjà un dispositif de pince destiné à être monté sur un marbre ou banc de contrôle des déformations éventuelles de la carrosserie d'un véhicule, afin de maintenir la carrosserie immobilisée pendant les opérations de contrôle et de redressement de cette dernière, comportant une pince de serrage montée sur un organe de support vertical réglable en hauteur et déplaçable latéralement sur un bras de support horizontal, l'organe de support vertical d'une part et le bras de support horizontal d'autre part comportant des moyens de blocage pour immobiliser la pince dans une position verticale et horizontale précise déterminée, l'invention est caractérisée en ce que l'organe de support vertical de la pince est constitué par une vis traversant des cales disposées respectivement sur et sous le bras de support horizontal constitué par une glissière réalisée à partir de deux barreaux allongés solidarisés à leurs extremités par des pièces soudées sur eux, possèdant une résistance à la flexion dans tous les sens et distants d'un intervalle permettant le passage de la vis, les cales coopérant avec des écrous pour l'immobilisation de la vis sur la glissière en une position choisie dans les directions horizontale et verticale, en ce que les cales sont pourvues de bagues de bronze, coaxiales à la vis, encastrées dans des logements des cales, et sur lesquelles prennent appui des cônes de centrage correspondants des écrous, chaque cale étant munie d'une collerette qui fait saillie à l'intérieur de l'espace compris entre les barreaux, et assure son centrage vis-à-vis de la glissière, et en ce que des échelles millimétriques sont placées le long de la glissière horizontale et sur la vis, afin de permettre un réglage précis de la position de la pince, respectivement, dans les coordonnées horizontale et verticale.

D'autres particularités et avantages de l'invention apparaîtront au cours de la description qui va suivre, faite en référence aux dessins annexés sur lesquels on a représenté à titre de l'exemple non limitatif, une forme de réalisation du dispositif de pince selon l'invention.

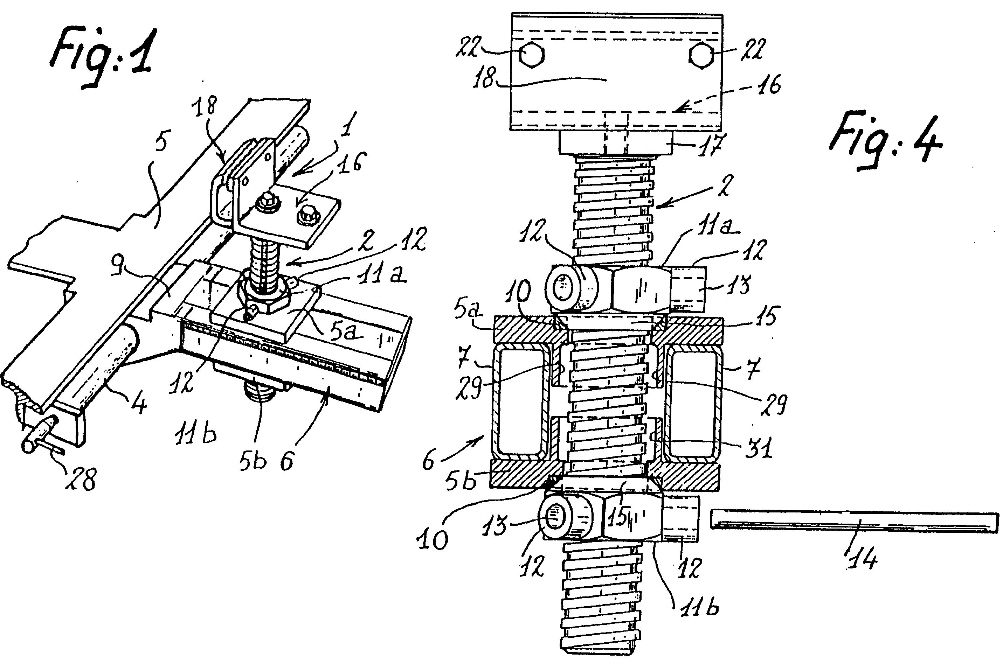

La figure 1 est une vue en perspective d'un dispositif de pince selon l'invention.

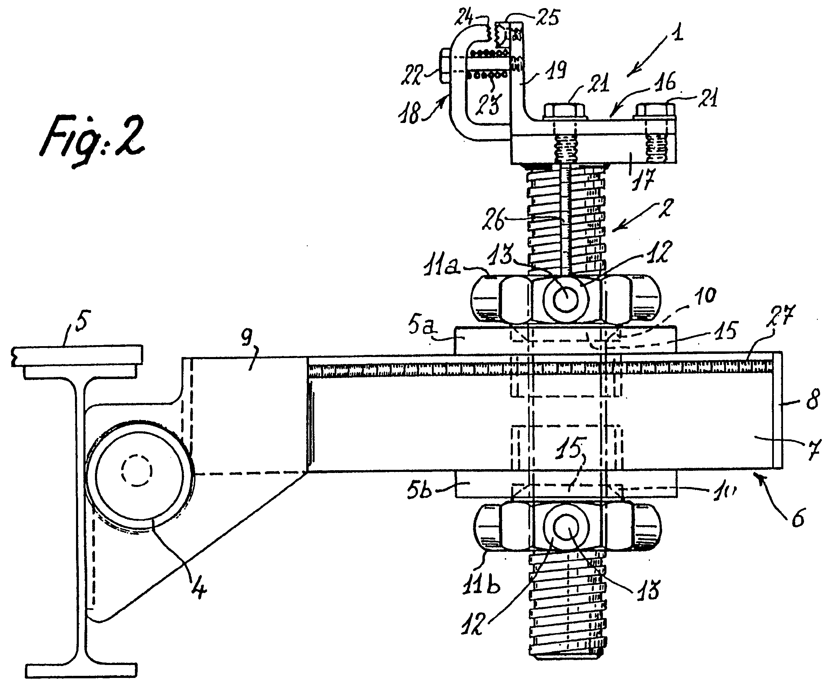

La figure 2 est une vue en élévation longitudinale à échelle agrandie, du dispositif de pince de la figure 1 monté sur le côté d'un marbre de contrôle de la carrosserie d'un véhicule.

La figure 3 est une vue de dessus en plan à la même échelle que la figure 2, du dispositif de pince des figures 1 et 2.

La figure 4 est une vue mi-coupe transversale, mi-élévation du dispositif de pince des figures 1 à 3.

Le dispositif de pince représenté aux dessins est destiné à être monté sur un marbre ou banc de contrôle des déformations éventuelles de la carrosserie d'un véhicule, tel que celui décrit au brevet français précité, afin de maintenir la carrosserie immobilisée pendant les opérations de contrôle et de redressement de cette dernière.

Le dispositif de pince comporte une mâchoire 1 de serrage fixée à l'extrémité supérieure d'un organe vertical 2 reglable en hauteur et déplaçable horizontalement sur un bras de support 6 fixé par son extrémité à un excentrique 4 de façon connue en soi, cet excentrique étant lui-même supporté à ses extrémités par une poutre longitudinale 5 du banc de contrôle.

Suivant l'invention, l'organe vertical 2 est une vis de longueur et de diamètre convenables, traversant deux cales 5a, 5b, ainsi qu'une glissière horizontale 6 formant le bras de support. La cale 5a, de contour rectangulaire dans l'exemple décrit, est disposée sur la glissière 6, tandis que la cale 5b est placée sous celle-ci, coaxialement à la vis 2 comme la cale 5a.

La glissière 6 est constituée de deux barreaux allongés 7, de section rectangulaire, distants entre eux d'un intervalle suffisant pour permettre le passage de la vis 2, et solidarisés par leurs extrémités au moyen de pièces transversales 8, 9 soudées aux barreaux 7. Les cales 5a, 5b sont serrées contre les barreaux 6 par des écrous respectifs 11a, 11b coaxiaux à la vis 2.

Les écrous 11a, 11b sont chacun pourvus de bossages 12 (au nombre de trois dans l'exemple illustré aux dessins) percés de trous 13 adaptés pour recevoir une broche 14 de manoeuvre. Les cales 5a, 5b sont pourvues de bagues 10 en bronze coaxiales à la vis 2, encastrées dans des logements des cales 5a, 5b et sur lesquelles prennent appui des cônes de centrage 15 correspondants des écrous 11a, 11b.

La pince de serrage proprement dite 1 placée à l'extrémité supérieure de la vis 2, est formée par la combinaison d'une cornière 16 fixée par son aile horizontale sur une semelle 17 soudée à l'extrémité supérieure de la vis 2, et d'une mâchoire mobile 18 supportée par l'aile verticale 19 de la cornière 16. Cette dernière est fixée à la semelle 17 par deux boulons 21, tandis que la mâchoire 18 est constituée par une pièce de section en U, traversée par des boulons horizontaux 22 venant se visser dans l'aile verticale 19, des ressorts hélicoïdaux 23 étant montés coaxialement aux boulons 22, entre l'aile 19 et la pièce 18. L'extrémité supérieure 24 de la mâchoire 18 est positionnée en regard d'un talon 25 solidaire de l'extrémité supérieure de l'aile 19, la carrosserie (non représentée) étant placée entre le talon 25 et l'extrémité supérieure 24.

La pince 1 ainsi réalisée est donc amovible, et ce par simple enlèvement des boulons 21.

Suivant une particularité, l'invention prévoit de placer des échelles millimétriques 26, 27 respectivement le long de la partie supérieure de la vis 2, et le long de la glissière horizontale 6. L'échelle verticale 26 permet de régler la position de la pince 1 par rotation de la vis 2 dans les cales 5a, 5b jusqu'à la coordonnée exacte voulue, tandis que l'échelle horizontale 27 permet de positionner de manière précise, la vis 2 et la pince 1 dans le sens horizontal.

La mise en oeuvre et les avantages techniques du dispositif de pince qui vient d'être décrit sont les suivants.

L'ensemble formé par la pince proprement dite 1, la vis 2, les cales 5a, 5b et les écrous de blocage 11a, 11b est déplacé manuellement en faisant glisser les cales 5a, 5b sur les barreaux horizontaux 7, après desserrage des écrous 11a, 11b. Lorsque la vis 2 est à l'emplacement voulu, lu sur la réglette millimétrée 27, on positionne la vis 2 et la pince 1 en hauteur jusqu'à la coordonnée choisie, lue sur la réglette verticale 26. Après quoi, l'opérateur bloque l'ensemble en position au moyen de la broche 14 qu'il introduit dans les bossages 12 des écrous 11a, 11b.

La rotation des écrous est favorisée par la présence des bagues de bronze 10 formant coussinets. Il ne reste plus ensuite à l'opérateur qu'à serrer la mâchoire 18 sur l'emplacement correspondant de la carrosserie, par actionnement des boulons 22.

Bien entendu, il est également possible de commencer par positionner en hauteur la pince 1 avant de la régler dans la direction horizontale.

Il convient de noter que la libération de l'écrou supérieur 11a, l'écrou inférieur 11b restant bloqué, permet un réglage en hauteur de la vis 2 et de la pince 1, et par conséquent un positionnement de cette dernière au mm près.

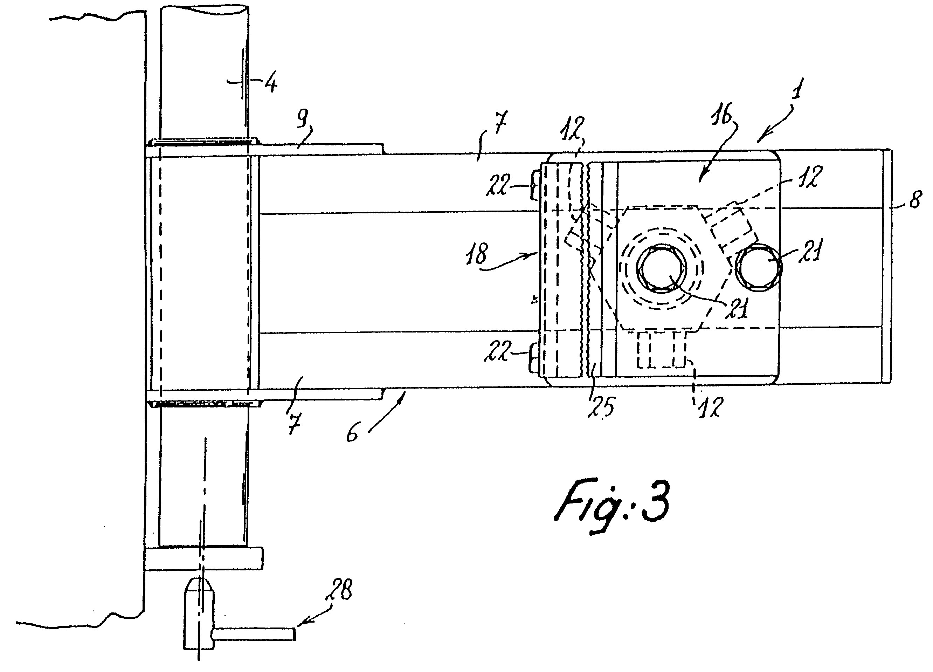

La broche 14 peut être utilisée également pour bloquer le dispositif de pince contre le marbre avec l'excentrique 4. Ce dernier peut aussi être manoeuvré de façon connue en soi par une clé 28 (figure 3).

On remarquera (figure 4) que chaque cale 5a, 5b est munie d'une collerette respective 29, 31 qui fait saillie à l'intérieur de l'espace compris entre les barreaux 7, et assure de ce fait le centrage de la cale correspondante 5a, 5b sur la glissière 6.

La présence des réglettes graduées millimétriques 26, 27 permet avantageusement un réglage précis de la position de la pince 1 dans les deux coordonnées verticale et horizontale, ce qui n'était pas possible avec les réalisations antérieures.

D'autre part, le dispositif de support de la pince 1 a une résistance à la flexion dans tous les sens, considérablement augmentée par rapport à la réalisation antérieure mentionnée précédemment, grâce à la structure particulière prévue, notamment la glissière 6 formée des deux bras horizontaux 7 très rigides.

Enfin, le montage amovible de la cornière 16 de la pince 1 sur la semelle 17 présente l'avantage de permettre un échange rapide de la cornière avec une autre, plus adaptée à la carrosserie à contrôler ou à redresser. Cette possibilité de remplacement rapide de la pince par une autre est importante, car elle permet d'adapter le dispositif de pince à l'évolution future des carrosseries.

L'invention n'est pas limitée à la forme de réalisation décrite et peut comporter des variantes d'exécution. Ainsi les cales 5a, 5b pourraient avoir un contour circulaire, de même que les écrous de blocage, qui alors ne comporteraient plus de bossages pour l'introduction de la broche de manoeuvre. On notera d'autre part que la glissière 6 peut être modifiée pour tenir compte de l'évolution possible des bas de caisses (construction monobloc sans reprise de tôle, avec suppression des lèvres de bas de caisse).

## Revendications

1. Dispositif de pince destiné à être monté sur un marbre ou banc de contrôle des déformations éventuelles de la carrosserie d'un véhicule, afin de maintenir la carrosserie immobilisée pendant les opérations de contrôle et de redressement de cette dernière, comportant une pince de serrage (1) montée sur un organe de support vertical (2) réglable en hauteur et déplaçable latéralement sur un bras support horizontal (6), l'organe de support vertical d'une part, et le bras de support horizontal d'autre part, comportant des moyens de blocage (11a, 11b) pour immobiliser la pince (1) dans une position verticale et horizontale précise déterminée, caractérisé en ce que l'organe de support vertical de la pince (1) est constitué par une vis (2) traversant des cales (5a, 5b) disposées, respectivement, sur et sous le bras de support horizontal constitué par une glissière (6), réalisée à partir de deux barreaux allongés (7) solidarisés à leurs extrêmités par des pièces soudées sur eux, possèdant une résistance à la resistance à la flexion dans tous les sens et distants d'un intervalle permettant le passage de la vis (2), les cales coopérant avec des écrous (11a, 11b) pour l'immobilisation de la vis sur la glissière en une position choisie dans les directions horizontale et verticale, en ce que les cales (5a, 5b) sont pourvues de bagues de bronze (10), coaxiales à la vis (2), encastrées dans des logements des cales (5a, 5b), et sur lesquelles prennent appui des cônes de centrage (15) correspondants des écrous (11a, 11b), chaque cale étant munie d'une collerette (29, 31) qui fait saillie à l'intérieur de l'espace compris entre les barreaux (7), et assure son centrage vis-à-vis de la glissière, et en ce que des échelles millimétriques (26, 27) sont placées le long de la glissière horizontale (6) et sur la vis (2), afin de permettre un réglage précis de la position de la pince (1), respectivement, dans les coordonnées horizontale et verticale.

2. Dispositif selon la revendication 1, caractérisé en ce que deux barreaux (7) constitutifs d'une glissière horizontale sont de section rectangulaire.

3. Dispositif selon l'une des revendications 1 ou 2, caractérisé en ce que les écrous (11a) et (11b) sont pourvus de bossages creux (12) adaptés pour recevoir une broche (14) de manoeuvre.

4. Dispositif selon l'une des revendications 1 à 3, caractérisé en ce que la pince (1) comporte une cornière (16) fixée de manière amovible à une semelle terminale (17) de la vis (2), et une mâchoire mobile (18) de serrage, solidarisée avec une aile verticale (19) de la cornière (16).

**Patentansprüche**

1. Klemmeinrichtung für eine Grundplatte oder Bank zum Prüfen etwaiger Verformungen einer Fahrzeugkarosserie zum Festhalten der Karosserie während der Prüfverfahren und des Ausrichtens, bestehend aus einer Spannklemme (1), die auf einem vertikalen Tragorgan (2) angeordnet und in der Höhe und seitlich auf einem horizontalen Tragarm (6) angeordnet ist, wobei das vertikale Tragorgan einerseits und der horizontale Tragarm andererseits Blockierungseinrichtungen (11a, 11b) aufweisen, um die Spannklemme (1) in einer genau vorbestimmten, vertikalen und horizontalen Stellung festzulegen, **dadurch gekennzeichnet, daß** das vertikale Tragorgan der Spannklemme (1) aus einer Schraube (2) besteht, die Keile (5a, 5b) durchquert, welche auf und unter dem horizontalen Tragarm angeordnet sind, der aus einer Gleitschiene (6) besteht, die aus zwei sich längs erstreckenden und an ihren äußeren Enden durch Schweißteile miteinander verbundenen Stangen (7) gebildet wird, die eine allseitige Biegefestigkeit und einen Abstand voneinander zum Durchgang der Schraube (2) aufweisen, wobei die Keile mit Schraubenmuttern (11a, 11b) zum Festlegen der Schraube auf der Gleitbahn in einer horizontalen und vertikalen Stellung zusammenarbeiten, wobei die Keile (5a, 5b) mit Bronzescheiben (10) versehen sind, die koaxial zur Schraube (2) in Aussparungen der Keile (5a, 5b) gelagert sind und auf denen sich Zentrierkonen (15) entsprechend den Muttern (11a, 11b) abstützen, wobei jeder Teil mit einem Kragen (29, 31) versehen ist, die in das Innere des Raumes zwischen den Stangen (7) vorspringen und ihre Zentrierung zu beiden Seiten der Gleitschienen gewährleisten, und daß Millimeterskalen (26, 27) längs der horizontalen Gleitschiene (6) und an der Schraube (2) angeordnet sind, um eine genaue Einstellung der Position der Spannklemme (1) in horizontalen und vertikalen Koordinaten zu ermöglichen.

2. Klemmeinrichtung nach Anspruch 1, **dadurch gekennzeichnet, daß** die Stäbe (7), welche die horizontale Gleitschiene bilden, einen rechteckigen Querschnitt aufweisen.

3. Vorrichtung nach einem der Ansprüche 1 oder 2, **dadurch gekennzeichnet, daß** die Schraubenmuttern (11a, 11b) mit hohlen Vorsprüngen (12) zur Aufnahme einer Handspindel (14) versehen sind.

4. Vorrichtung nach einem der Ansprüche 1 bis 3, **dadurch gekennzeichnet, daß** die Spannklemme (1) ein Winkelstück (16) aufweist, das beweglich auf einer beweglichen Fußplatte (17) der Schraube (2) befestigt ist, wobei eine bewegliche Spannklemmbacke (18) mit einem senkrechten Flügel (19) des Winkelstückes (16) verbunden ist.

**Claims**

1. Gripper device intended to be fitted on a slab or bench for monitoring any deformations of the bodywork of a vehicle in order to keep the bodywork immobilised during the operations of checking and correcting the bodywork, comprising a clamping gripper (1) mounted on a vertical support element (2) of regulable height which is displaceable laterally on a horizontal support arm (6), the vertical support element for the one part and the horizontal support arm for another part comprising locking means (11a. 11b) for immobilising the gripper (1) in a determined precise vertical and horizontal position, characterised in that the vertical support element of the gripper (1) is constituted by a worm (2) passing through blocks (5a, 5b) disposed respectively above and below the horizontal support arm constituted by a slideway (6) produced from two elongated bars (7) fast at their extremities by pieces welded on them, possessing a resistance to flexure in all directions and spaced by an interval permitting the passage of the worm (2), the blocks co-operating with nuts (11a, 11b) for the immobilisation of the worm on the slideway in a selected position in the horizontal and vertical directions, in that the blocks (5a, 5b) are provided with bronze rings (10) coaxial with the worm (2) and inset in lodgements of the blocks (5a, 5b). upon which there act corresponding centring cones (15) of the nuts (11a, 11b), each block being equipped with a collar (29, 31) which protrudes to the interior of the space included between the bars (7) and effects its centring in relation to the slideway, and in that millimetre scales (26, 27) are placed along the horizontal slideway (6) and on the worm (2), in order to permit precise regulation of the position of the gripper (1) in the horizontal and vertical co-ordinates respectively.

2. Device according to Claim 1, characterised in that two bars (7) constituting a horizontal slideway are of rectangular section.

3. Device according to one of Claims 1 or 2, characterised in that the nuts (11a) and (11b) are provided with hollow bosses (12) adapted to receive a tommy-bar (14).

4. Device according to one of Claims 1 to 3, characterised in that the gripper (1) comprises an angle piece (16) fixed detachably to an end sole piece (17) of the worm (2), and a movable clamping jaw (18), made fast with a vertical arm (19) of the angle piece (16).

Fig.4

Fig.1

Fig.2

Fig:3